# EUROPÄISCHE PATENTSCHRIFT

(11) **EP 0 371 571 B1**
(45) Veröffentlichungstag und Bekanntmachung des Hinweises auf die Patenterteilung: **31.03.1993**
(21) Anmeldenummer: 89250077.8
(22) Anmeldetag: 08.11.1989
(51) Int. Cl.: A01C 3/06, A01D 90/10

(54) **Entladeeinrichtung für containerförmige Behälter**
Unloader for containers
Dispositif pour décharger des conteneurs

(30) Priorität: 30.11.1988 DE 3840811
(43) Veröffentlichungstag der Anmeldung: 06.06.1990
(73) Patentinhaber: MANNESMANN Aktiengesellschaft, 40027 Düsseldorf (DE)
(72) Erfinder: Strobach, Karl, D-4100 Duisburg 29 (DE)
(74) Vertreter: Meissner, Peter E., Dipl.-Ing.

(56) Entgegenhaltungen:
- DE-A- 1 657 006
- DE-A- 2 511 440
- DE-A- 2 530 319
- DE-B- 1 175 154
- GB-A- 793 206

## Beschreibung

Die Erfindung betrifft eine Entladevorrichtung an einem containerförmigen Rottebehälter, gemäß dem Oberbegriff des Anspruchs 1.

Eine derartige Entladeeinrichtung ist bereits durch die DE-A-16 57 006 bekannt geworden.

Darüber hinhaus ist aus der DE-A-36 31 170 A1 ein Verfahren zur Kompostierung organischer Abfälle bekannt, bei dem der Rotteprozeß zunächst in containerförmigen Behältern durchgeführt wird, die zur Beschleunigung des Prozesses an eine Zwangsbelüftung angeschlossen werden. Nach Abbau der leicht fermentierbaren Bestandteile des Rottegutes wird die Fermentierung abgebrochen. Dabei wird ein hochwertiges Düngemittel mit hohem organischen Anteil erhalten. Sofern die Verwendung dieses Produktes nicht unmittelbar erfolgen soll, kann auch eine Nachrotte in Form einer Mietenrotte durchgeführt werden. In diesem Fall kommt es darauf an, das Rottegut möglichst vollständig aus dem Rottebehälter zu entleeren und zu einem mietenförmigen Gebilde aufzuschichten, wobei eine Lockerung des Rottegutes für eine effektive Nachrotte gewährleitet sein muß.

Eine Klumpenbildung, die während der Fermentierung im Rottebehälter stattgefunden haben kann, muß also wieder aufgelöst werden. Die Gewährleistung der Klumpenfreiheit oder Streufähigkeit kann auch bei Entleerung andersartiger Schüttgüter aus Behältern erwünscht sein.

Um nach Möglichkeit ein klumpenfreies Schüttgut zu erhalten, ist es im Falle der Kompostierung naheliegend, die Rottebehälter z.B. durch Auskippen auf einen Kratzboden zu entleeren, von dem aus das Rottegut kontinuierlich abgezogen und beispielsweise über bewegliche Förderbänder zu einer Miete aufgeschichtet werden kann. Diese Lösung bedingt jedoch einen erheblichen Anlagenaufwand und gewährleistet die Auflockerung des Rottegutes nur in beschränktem Maße.

Aus der WO-A- 80/01793 ist eine auf einem Fahrzeug montierte Vorrichtung zur Entleerung von Schüttgütern aus einem containerförmigen Behälter bekannt, bei der der Behälter auf einem kippbaren Aufnahmegestell angeordnet ist. Die Rückwand des Behälters ist im unteren Teil als ausschwenkbare Entladeluke ausgebildet. Nach dem Öffnen dieser Luke kann ein auf pneumatischem Wege arbeitendes Entladeaggregat auf Gleitschienen an die Entladeöffnung herangeschoben werden, bis es zur dichten Anlage an die Rückwand kommt. Damit das Schüttgut nach dem Öffnen der Luke nicht aus der Entladeöffnung herausfallen kann, wird es auf der Innenseite des Behälters zunächst durch eine Folienbespannung zurückgehalten. Erst nach erfolgtem Anlegen der Entleerungsvorrichtung an die Rückwand wird diese Folienbespannung durch eine Inspektionsklappe hindurch von der Bedienungsperson der Vorrichtung zerschnitten, so daß das Schüttgut nach Schrägstellung des Behälters in die Entleerungsvorrichtung fallen kann. Von dieser wird es dann über eine Feststoffleitung pneumatisch in eine Silospeicheranlage befördert.

Diese bekannte Entleerungsvorrichtung ist allein schon wegen des erforderlichen pneumatischen Förderaggregates sehr teuer und hat einen erheblichen Platzbedarf, weil das langgestreckte Förderaggregat hinter dem containerförmigen Behälter angeordnet ist. Da die Entladeluke unbedingt vor dem Anlegen des Entladeaggregates aufgeklappt werden muß, ergibt sich eine umständliche Handhabung. Diese Vorrichtung ist daher auch nur für die Behandlung von Schüttgütern gedacht, deren Entleerung mit starker Staubbelästigung für die Umgebung verbunden wäre. Zur Entleerung von Kompostierbehältern ist diese Vorrichtung technisch und wirtschaftlich ungeeignet.

Ferner sind oben offene landwirtschaftliche Streufahrzeuge für das Ausstreuen von Stalldung bekannt, die auch mit einem demontierbaren Streuaggregat ausgebildet sein können, wie dies z.B. aus der FR-A- 24 05 156 A1 entnehmbar ist. Das Streuaggregat stellt dabei eine selbständige Baueinheit dar, mit der ein normal benutzbarer Anhänger in ein Streufahrzeug umfunktioniert werden kann. Im Unterschied zu Spezialstreufahrzeugen kann der verwendete Anhänger daher bei abgenommener Streuvorrichtung auch für normale Transportaufgaben eingesetzt werden. Die Streuvorrichtung ist während des gesamten Einsatzes als Streufahrzeug ständig fest an der Ladefläche montiert und wird nicht jeweils nach jeder Entleerung eines Anhängers abgenommen und an einen anderen gefüllten Anhänger montiert. Vielmehr wird das entleerte Streufahrzeug stets erneut wieder befüllt und zum Ausstreuen eingesetzt, bis die auszustreuende Menge verarbeitet ist. Erst danach erfolgt bei Bedarf die Demontage der Streuvorrichtung, die mit einem erheblichen Handhabungsaufwand verbunden ist. Streufahrzeuge der genannten Art werden stets nur zur großflächigen Verteilung des Streugutes auf landwirtschaftlichen Nutzflächen eingesetzt, nicht aber zur Aufschichtung eines Schüttgutes zu einem lockeren Haufwerk.

Aufgabe der Erfindung ist daher, eine Lösung für das geschilderte Problem der Ausleerung eines Schüttgutes und seiner Aufschichtung zu einem lockeren Haufwerk vorzuschlagen, wobei die Lösung einen möglichst geringen Anlagenaufwand erfordern und eine sichere Auflösung gebildeter Klumpen gewährleisten soll.

Gelöst wird diese Aufgabe erfindungsgemäß durch eine Entladeeinrichtung mit den kennzeichnenden Merkmalen des Patentanspruchs 1; vorteilhafte Weiterbildungen der Erfindung sind in Unteransprüchen 2 bis gekennzeichnet.

Ein wesentlicher Gedanke der erfindungsgemäßen Lösung ist es, die Entleerung des jeweiligen Behälters durch Auskippen durchzuführen und gleichzeitig eine vollständige Auflockerung des zu entleerenden Schüttgutes des Behälters dadurch zu erreichen, daß dieses zwangsweise durch eine Streuvorrichtung geführt und dabei im erforderlichen Maße zerkleinert wird. Erfindungsgemäß ist vorgesehen, daß diese Streuvorrichtung unabhängig vom jeweiligen Behälter ist. Insofern besteht auch ein grundlegender Unterschied zu den aus der Landwirtschaft bekannten Stalldungstreuern. Bei diesen ist die Streuvorrichtung nämlich fest montierter Bestandteil der Ladefläche, also des Laderaumes, in dem sich das Streugut befindet. Im Gegensatz hierzu ist nach der Erfindung das Streuwerk fest mit einem Aufnahmegestell für die zu entleerenden Behälter verbunden und nicht mit dem Behälter selbst. Dies hat den großen Vorteil, daß nicht für jeden Behälter ein eigenes Streuwerk vorgesehen sein muß, so daß nicht nur der Anlagenaufwand vermindert wird, sondern auch der benötigte Platzbedarf bei der Abstellung der Behälter nicht vergrößert wird.

Während bei bekannten Stalldungstreuern eine großflächige Verteilung des Streugutes stattfindet, ist dies bei dem der Erfindung zugrundeliegenden Problem nicht erwünscht.

Dadurch, daß der zu entleerende Behälter während des Streuvorgangs schräggestellt wird, um das darin enthaltene Schüttgut in das Streuwerk fallen bzw. rutschen zu lassen, ist die Streuvorrichtung entsprechend schräg auf den Boden gerichtet. Hierdurch ergibt sich eine vergleichsweise eng begrenzte Auftreffzone für den Streustrahl. Der Kippvorgang ermöglicht daher nicht nur eine mit geringem Aufwand realisierbare Entleerung des Behälters, so daß beispielsweise ein Kratzboden in den Behältern selbst zur Entleerung überflüssig ist. Darüberhinaus ermöglicht der Kippvorgang auch eine gezielte Aufschichtung der Mieten wegen der engen Begrenzbarkeit der Auftreffzone.

Anhand der in den Figuren dargestellten Ausführungsbeispiele wird die Erfindung nachfolgend näher erläutert. Es zeigen:
- Fig. 1: einen erfindungsgemäßen Greifrahmen mit Streuvorrichtung und angekoppeltem Behälter (Ansicht C gemäß Fig. 3),
- Fig. 2: einen vereinfachten Längsschnitt durch einen Greifrahmen mit angekoppeltem Behälter gemäß Fig. 1 (Schnitt A-A),
- Fig. 3: einen vereinfachten Querschnitt durch einen Greifrahmen mit angekoppeltem Behälter gemäß Fig. 1 (Schnitt B-B),
- Fig. 4: ein erfindungsgemäßes Container-Transportfahrzeug mit Streuvorrichtung und aufgesetztem Behälter,
- Fig. 5: das Container-Fahrzeug gemäß Fig. 4 im Kippzustand.

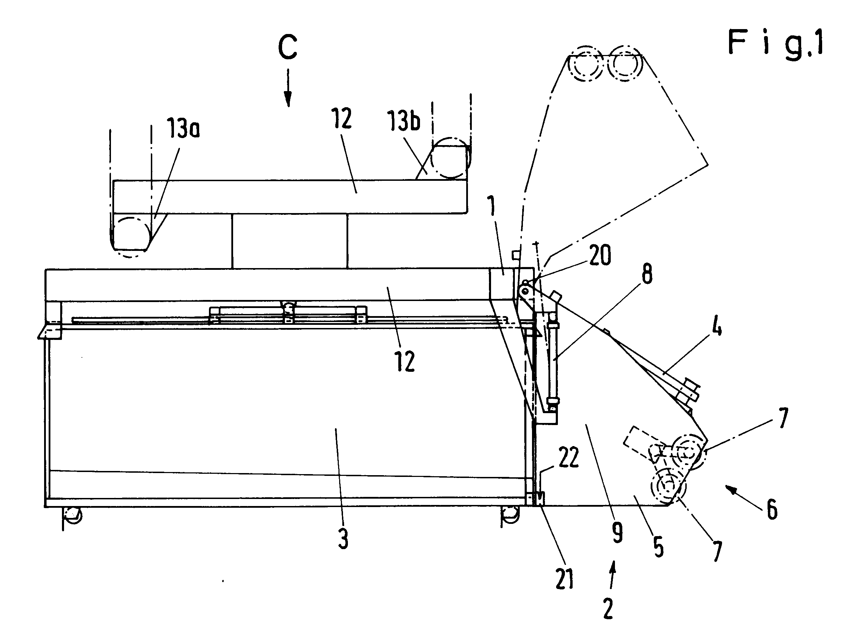

Funktionsgleiche Teile sind in den Fig. 1 bis 5 mit gleichen Bezugszeichen versehen worden.

In den Fig. 1 bis 3 ist die Erfindung in Form eines speziellen Ladegeschirrs für eine Krananlage zum Transport von containerförmigen Rottebehältern 3 (Behälter 3) realisiert. Dieses Ladegeschirr besteht im wesentlichen aus einem Greifrahmen 12, der auf den Behälter 3 aufgesetzt und durch geeignete Verriegelungen mit diesem gekoppelt wird. Der Greifrahmen 12 ist über die (ggf. auch paarweise angeordneten) Halteeinrichtungen 13a, b mit einer nicht weiter dargestellten Hebeeinrichtung (z.B. Portalkran) verbindbar. Dadurch, daß die Halteeinrichtungen 13a, b unabhängig voneinander in verschiedene Höhenpositionen gebracht werden können, wird ein Kippen des Behälters 3 möglich. An der rechten Seite des Greifrahmens 12 ist eine Halterung 1 angeordnet, an die eine Streuvorrichtung 2 schwenkbar angekoppelt ist. Die Schmalseite des Behälters 3, an der die Streuvorrichtung 2 anliegt, ist mit einer nach außen ausschwenkbaren Entladelukenklappe 4 ausgestattet, wobei die Scharniere im oberen Teil der Entladelukenklappe 4 angeschlagen sind. Die Streuvorrichtung 2 weist ein kastenförmiges Gehäuse 5 auf, dessen Seitenwände mit 9 bezeichnet sind. Im dargestellten Ausführungsbeispiel wird die obere Begrenzungswand des Gehäuses 5 durch die ausgeschwenkte Entladelukenklappe 4 gebildet, die durch nicht dargestellte Anschläge an den Seitenwänden 9 gegen ein Überschwingen nach außen gesichert ist. Das Gehäuse 5 ist zu der von der Entladelukenklappe 4 verschließbaren Seite des Behälters 3 hin offen, so daß das Schüttgut aus dem Behälter 3 im gekippten Zustand in die Streuvorrichtung 2 rutscht. Die dieser offenen Seite der Streuvorrichtung gegenüberliegende Seite ist ebenfalls offen. An dieser zweiten offenen Seite ist ein Streuwerk 6 angeordnet, das im Ausführungsbeispiel als Streuwalzenpaar 7 mit horizontaler Drehachse ausgebildet ist. Wie aus der gestrichelt dargestellten zweiten Position der Streuvorrichtung 2 hervorgeht, ist die Streuvorrichtung 2 vor die Entladelukenklappe 4 des Behälters 3 schwenkbar. Die Schwenkbewegung ist durch einen Hydraulikzylinder 8, der mit der Halterung 1 verbunden ist, ausführbar.

Das Drehgelenk der Streuvorrichtung 2, das die Schwenkachse bildet, ist in einem vertikal verlaufenden Langloch geführt. Dadurch wird erreicht, daß die Streuvorrichtung beim Ausfahren des Hydraulikzylinders 8 zunächst etwas angehoben wird, bevor die eigentliche Schwenkbewegung nach oben beginnt. Dies hat den Sinn, daß die im unteren Teil der Streuvorrichtung 2 an den Seitenwänden 9 befestigten Verriegelungsbolzen 22 aus den Halteschuhen 21, die an der Entleerungsseite des Behälters 3 angeordnet und nach oben offen sind, herausgehoben werden und so die Verriegelung der Streuvorrichtung 2 mit dem Behälter 3 aufgehoben wird. Durch diese mechanische Verriegelung ist eine Druckbeaufschlagung des Hydraulikzylinders 8 während dem Entleerungsvorgangs nicht mehr erforderlich, um eine sichere Anlage der Streuvorrichtung 2 an die Entleerungsseite des Behälters 3 zu gewährleisten.

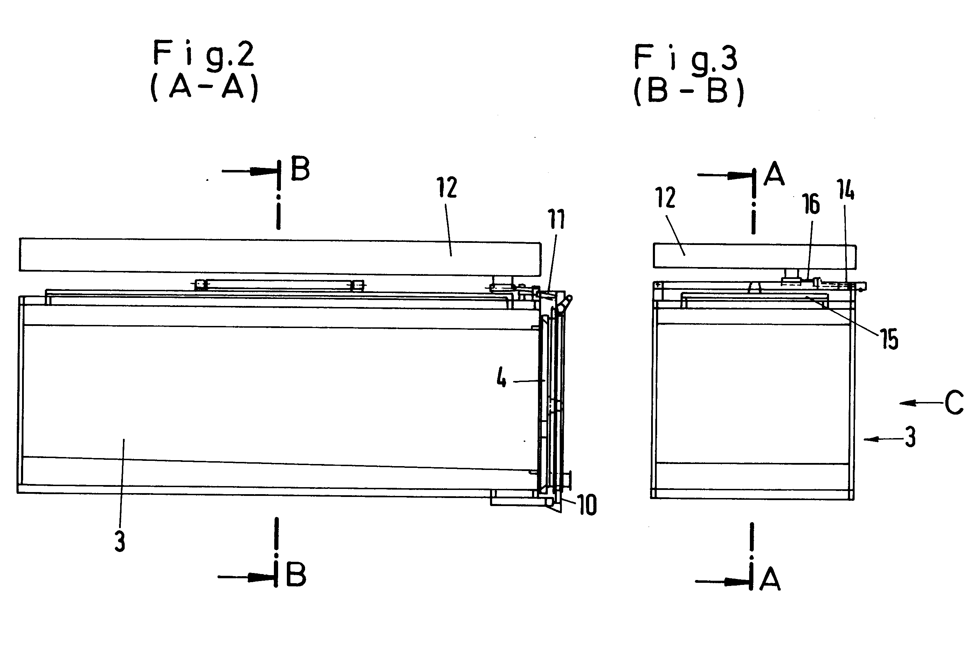

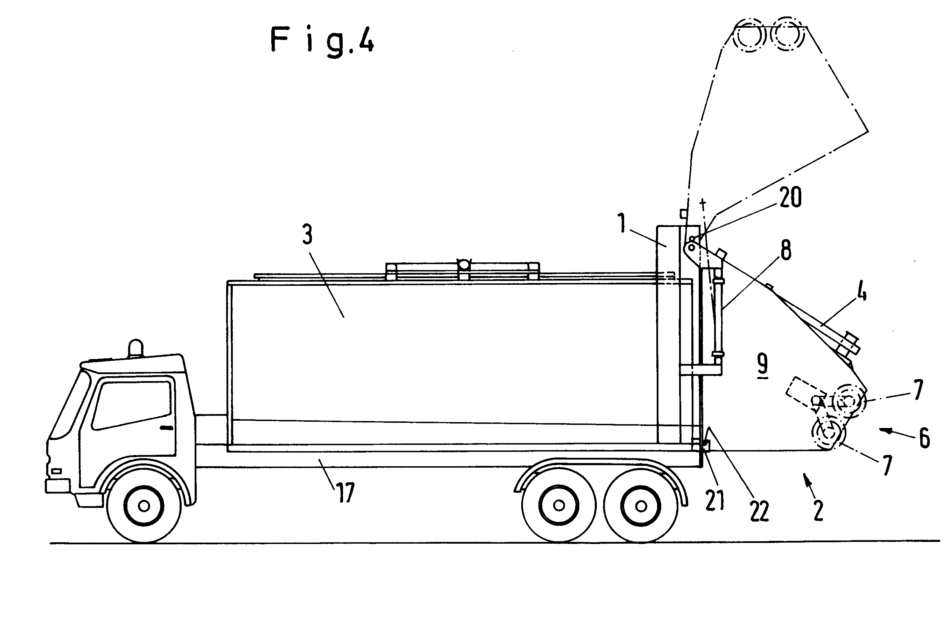

In den Schnittbildern gemäß Fig. 2 und 3 ist die Streuvorrichtung zur Vereinfachung der Darstellung weggelassen worden bzw. durch die Lage des Schnittes entfallen. Aus Fig. 2 geht hervor, daß die Entladelukenklappe 4 durch eine mechanische Verriegelung 10 verschließbar ist. Diese Verriegelung 10 kann durch einen an dem Greifrahmen 12 angeordneten, fernbetätigbaren und mit der Verriegelung 10 verbindbaren Antrieb 11 (z.B. Hydraulikzylinder) gelöst und auch wieder geschlossen werden. Dadurch ist die Ausführung des Entleerungsvorgangs ohne zusätzliche manuelle Eingriffe vom eingesetzten Hebezeug aus möglich. Entsprechendes gilt im umgekehrten Sinn für die an der Oberseite des Behälters 3 angeordnete Beladeluke 15, die bei der Durchführung der Schnellkompostierung und während des Kippens des Behälters 3 zugehalten werden muß. Hierfür ist am Behälter 3 eine entsprechende Zuhaltevorrichtung 14 vorgesehen, die über einen mit dieser koppelbaren fernbetätigbaren Antrieb 16 am Greifrahmen 12 verriegelbar und nach der Entleerung wieder entriegelbar ist.

Dieser Antrieb 16 ist zweckmäßig ebenfalls als Hydraulikzylinder ausgebildet, kann aber z.B. ebenso wie der Antrieb 11 auch als Elektromotor mit geeignetem Zahnstangengetriebe oder in anderer Weise realisiert werden.

Die Funktion der in Fig. 1 bis 3 dargestellten erfindungsgemäßen Lösung ist wie folgt:
Ein z.B. mit Rottegut gefüllter Behälter 3 wird nach Beendigung des Schnellrottevorgangs von dem z.B. an einem Hallenkran hängenden Tragrahmen 12 aufgenommen und an den Ort der Nachrotte gefahren, wo die Entleerung auf eine Miete erfolgen soll. Die Streuvorrichtung 2 wird mit dem Hydraulikzylinder 8 vor die Entladelukenklappe 4 geschwenkt. Während die Zuhaltevorrichtung 14 der Beladeluke 15 mittels des Antriebs 16 bereits unmittelbar nach Einfüllen des Rottegutes in den Behälter 3, und zwar beim Aufnehmen und Transportieren des Behälters 3 zu einer zentralen Rottestation (mit Anschluß an eine Zwangsbelüftung) verriegelt wurde, wird die Verriegelung 10 der Entladelukenklappe 4 am Ort der Nachrotte mittels des Antriebs 11 entriegelt. Durch einseitiges Anheben der Halteeinrichtung 13a wird der Behälter 3 in der Weise gekippt, daß seine Entladeseite tiefer liegt. Hierdurch öffnet sich die Entladelukenklappe 4 infolge der Schwerkrafteinwirkung selbsttätig und schwenkt nach außen. Der Inhalt des Behälters 3 rutscht in die Streuvorrichtung 2 und wird durch die angetriebenen Streuwalzen 7 zerkleinert und ausgeworfen. Es entsteht ein kontinuierlicher und gleichmäßiger schräg nach unten gerichteter Streustrahl, der es ermöglicht, bei gleichzeitigem Verfahren des Behälters 3 mit dem Hebezeug eine gewünschte Mietenform zu erzeugen, ohne daß es des Einsatzes besonderer Bandförderanlagen oder ähnlichem bedarf. Vielmehr reicht ein für das Bewegen der Behälter ohnehin vorhandenes Gerät hierzu aus, welches in der erfindungsgemäßen Weise mit den zusätzlichen Ausstattungsmerkmalen versehen wurde.

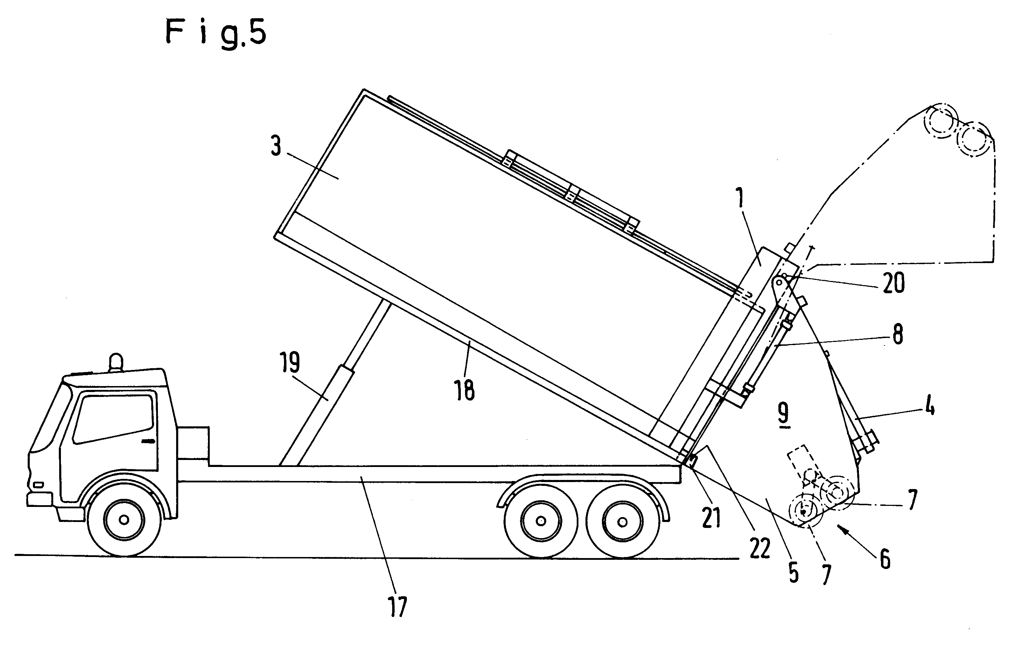

Anstelle einer Krananlage kann für die Bewegung der Behälter 3 auch ein Container-Transportfahrzeug 17 eingesetzt werden. Wie Fig. 4 und 5 zeigen, kann die erfindungsgemäße Streuvorrichtung 2 über die Halterung 1 auch mit dem Tragrahmen 18 eines solchen Fahrzeugs 17, auf das ein Behälter 3 aufgesetzt werden kann, verbunden sein. Fig. 5 zeigt, daß der Tragrahmen 18 des Container-Transportfahrzeugs 17 mit Hilfe eines Hubzylinders 19 in die für die Entleerung erforderliche Kippstellung gebracht werden kann. Die Funktion dieser Ausführung der Erfindung entspricht im wesentlichen derjenigen der Fig. 1 bis 3.

Die erfindungsgemäße Entladeeinrichtung kann auch in eine stationäre Entladestation integriert sein. Im Unterschied zu den dargestellten mobilen Ausführungen muß dabei allerdings in Kauf genommen werden, daß über die ohnehin benötigten Container-Transporteinrichtungen hinaus für den Abtransport des entleerten Schüttgutes zusätzliche Transporteinrichtungen vorgesehen werden müssen.

## Patentansprüche

1. Entladeeinrichtung an einem containerförmigen Rottebehälter (3), bei dem eine Seitenwand als entriegelbare Entladelukenklappe (4) ausgebildet ist, mit einem Aufnahmegestell (12, 18) für den Rottebehälter (3), wobei an dem Aufnahmegestell (12, 18) eine Halterung (1) angeordnet ist, an welcher eine Streuvorrichtung mit einem Streuwerk (2) zum Ausleeren des im Rottebehälter (3) befindlichen Schüttgutes in der Weise befestigt ist, daß die Streuvorrichtung (2) außerhalb und unmittelbar in Fahrtrichtung der durch die Entladelukenklappe (4) verschließaren Öffnung des Rottebehälters (3) anschließbar ist, daß zwecks Entleerung des Rottebehälters (3) durch Kippen und zur Aufschichtung des Schüttgutes zu einem lockeren Haufwerk das Aufnahmegestell (12, 18) schräggestellt oder kippbar ist,
dadurch gekennzeichnet,
daß die Streuvorrichtung (2) ein kastenförmiges Gehäuse (5) aufweist, das auf zwei gegenüberliegenden Seiten offen ist, von denen die erste, in Fahrtrichtung weisende Seite mit der Außenseite der Entladelukenklappe (4) des Rottebehälters (3) so zur Anlage bringbar ist, daß die Entladelukenklappe (4) des Rottebehälters (3) durch dessen Schrägstellung nach außen in das kastenförmigen Gehäuse (5) hinein aufschwenkbar ist und an deren der ersten gegenüberliegenden, zweiten Seite das Streuwerk (2) so angeordnet ist, in der Schrägstellung oder gekippten Stellung des Aufnahmegestells (12, 18) der Streustrahl beim Verlassen der Streuvorrichtung (2) schräg nach unten gerichtet ist.

2. Entladeeinrichtung nach Anspruch 1,
dadurch gekennzeichnet,
daß die ausgeschwenkte Entladelukenklappe (4) des Rottebehälters (3) eine Wand des kastenförmigen Gehäuses (5) bildet und durch Anschläge an den Seitenwänden (9) gegen ein überschwingen nach außen gesichert ist.

3. Entladeeinrichtung nach Anspruch 2,
dadurch gekennzeichnet,
daß das Streuwerk (6) aus mindestens einem Paar von Streuwalzen (7) besteht.

4. Entladeeinrichtung nach einem der Ansprüche 1 bis 3,
dadurch gekennzeichnet,
daß die Streuvorrichtung (2) vor die Außenseite der Entladelukenklappe (4) des Rottebehälters (3) schwenkbar ist.

5. Entladeeinrichtung nach Anspruch 4,
dadurch gekennzeichnet,
daß die Schwenkbewegung der Streuvorrichtung (2) durch mindestens einen Hydraulikzylinder (8) zu betätigen ist.

6. Entladeeinrichtung nach einem der Ansprüche 1 bis 5,
dadurch gekennzeichnet,
daß die Halterung (1) einen fernbetätigbaren und mit der Verriegelung (10) der Entladelukenklappe (4) des Rottebehälters (3) verbindbaren Antrieb (11) aufweist.

7. Entladeeinrichtung nach Anspruch 6,
dadurch gekennzeichnet,
daß der Antrieb (11) hydraulisch betätigbar ist.

8. Entladeeinrichtung nach einem der Ansprüche 1 bis 7,
dadurch gekennzeichnet,
daß das Aufnahmegestell als Greifrahmen (12) zum Greifen des Rottebehälters (3) an dessen Oberseite ausgebildet ist, wobei der Greifrahmen (12) an mindestens zwei im Abstand voneinander angeordneten Halteeinrichtungen (13a, b) mit einer Hebeeinrichtung koppelbar ist, durch die die Halteeinrichtungen (13a, b) unabhängig voneinander in unterschiedliche Höhenpositionen bringbar sind.

9. Entladeeinrichtung nach Anspruch 8,
dadurch gekennzeichnet,
daß der Greifrahmen (12) einen fernbetätigbaren und mit der Zuhaltevorrichtung (14) für eine auf der Oberseite des Behälters (3) befindliche Beladeluke (15) verbindbaren Antrieb (16) aufweist.

10. Entladeeinrichtung nach Anspruch 9,
dadurch gekennzeichnet,
daß der Antrieb (16) hydraulisch betätigbar ist.

11. Entladeeinrichtung nach einem der Ansprüche 1 bis 7,
dadurch gekennzeichnet,
daß das Aufnahmegestell als kippbarer Tragrahmen (18) eines Container-Transportfahrzeugs (17) ausgebildet ist, auf den die Rottebehälter (3) aufsetzbar sind.

12. Entladeeinrichtung nach einem der Ansprüche 5 bis 11,
dadurch gekennzeichnet,
daß die Schwenkachse der Streuvorrichtung (2) in einer vertikal angeordneten Langlochführung (20) gelagert ist und daß die Streuvorrichtung (2) mit starren Verriegelungsbolzen verbunden ist, die in Arbeitspositionen in nach oben offenen Halteschuhen (21) des Rottebehälters (3) einrastbar sind.

## Claims

1. A discharging device for a container-like composting vessel (3), wherein a side wall is designed as a an unlockable discharge hatch flap (4), with a receiving frame (12, 18) for the composting vessel (3), where a fixing device (1) is arranged on the receiving frame (12, 18), to which fixing device (1) is attached a scattering device comprising a scattering mechanism (2) for discharging the bulk material contained in the composting vessel (3) in such manner that the scattering device (2) can be connected outside of and directly in the direction of travel of the opening of the composting vessel (3) which can be closed by the discharge hatch flap (1), that in order to empty the composting vessel (3) by tilting and in order to pile up the bulk goods to form a loose heap the receiving frame (12, 18) is obliquely positioned or is tiltable, characterised in that the scattering device (2) comprises a box-like housing (5) which is open on two opposite sides, where the first side of said housing (5), which faces in the direction of travel, can be brought into contact with the outside of the discharge hatch flap (4) of the composting vessel (3) in such manner that by virtue of the oblique positioning of the composting vessel (3) the discharge hatch flap (4) of the composting vessel (3) can be swung up outwardly into the box-like housing (5), and where the scattering mechanism (2) is arranged on the second side of said housing (5), which is located opposite the first side, in such manner that when the receiving frame (12, 18) is in the oblique position or tilted position, the scattered stream, on issuing from the scattering device (2), is directed obliquely downwards.

2. A discharging device as claimed in Claim 1, characterised in that the swung-out discharge hatch flap (4) of the composting container (3) forms one wall of the box-like housing (5) and is prevented from overswinging outwards by means of stops on the side walls (9).

3. A discharging device as claimed in Claim 2, characterised in that the scattering mechanism (6) consists of at least one pair of scattering rollers (7).

4. A discharging device as claimed in one of Claims 1 to 3, characterised in that the scattering device (2) can be swung in front of the outer side of the discharge hatch flap (4) of the composting vessel (3).

5. A discharging device as claimed in Claim 4, characterised in that the swinging movement of the scattering device (2) can be actuated by at least one hydraulic cylinder (8).

6. A discharging device as claimed in one of Claims 1 to 5, characterised in that the fixing device (1) comprises a remote-controllable drive means (11) which can be connected to the locking device (10) of the discharge hatch flap (4) of the composting vessel (3).

7. A discharging device as claimed in Claim 6, characterised in that the drive means (11) can be actuated hydraulically.

8. A discharging device as claimed in one of Claims 1 to 7, characterised in that the receiving frame is constructed as a spreader (12) which grips the composting vessel (3) on its upper side, where the spreader (12) can be coupled via at least two holding devices (13a, 13b), spaced by a distance from one another, to a lifting device by which the holding devices (13a, 13b) can be brought into different vertical positions independently of one another.

9. A discharging device as claimed in Claim 8, characterised in that the spreader (12) comprises a remote-controllable drive means (16) which can be connected to the locking device (14) for a loading hatch (15) located on the upper side of the vessel (3).

10. A discharging device as claimed in Claim 9, characterised in that the drive means (16) can be actuated hydraulically.

11. A discharging device as claimed in one of Claims 1 to 7, characterised in that the receiving frame is constructed as a tiltable support frame (18) of a container transport vehicle (17) on which the composting vessels (3) can be positioned.

12. A discharging device as claimed in one of Claims 5 to 11, characterised in that the pivot axis of the scattering device (2) is mounted in a vertically arranged guide slot (20) and that the scattering device (2) is connected to rigid locking bolts which can be locked in operating positions in upwardly open retaining shoes (21) of the composting vessel (3).

## Revendications

1. Dispositif de déchargement sur un récipient (3) de fermentation dont une paroi latérale forme le volet (4) d'une trappe de décharge pouvant être déverrouillée, avec un châssis (12, 18) récepteur pour le récipient (3), une attache (1) étant prévue sur celui-ci et un dispositif répartisseur comportant un mécanisme répartisseur (2) pour vider le matériau en vrac présent dans le conteneur (3) étant fixé sur l'attache de manière à ce que le dispositif répartisseur (2) puisse être accouplé à l'extérieur et directement en direction de la trajectoire de l'ouverture du récipient (3) pouvant être fermée par le volet (4) de la trappe de déchargement, que le châssis (12, 18) peut être incliné ou basculé pour vider le récipient (3) par basculement afin de déverser le matériau en vrac en un tas meuble, caractérisé en ce que le dispositif répartisseur (2) comprend un carter (5) en forme de boîte, ouvert sur deux côtés opposés dont le premier est orienté en direction de la trajectoire et peut être jointif avec la face extérieure du volet (4) de déchargement du récipient (3) de façon à ce que ce volet (4) de déchargement du récipient puisse être basculé vers l'extérieur et introduit dans le carter (5) par l'inclinaison du récipient (3), le mécanisme répartisseur (2) étant agencé sur le second côté situé à l'opposé du premier de façon à ce que dans la position inclinée ou basculée du châssis (12, 18) le jet quittant le dispositif répartisseur (2) soit dirigé obliquement vers le bas.

2. Dispositif selon la revendication 1, caractérisé en ce que le volet (4) de la trappe de déchargement du récipient (3) forme une paroi du carter (5) et que des butées sur les parois latérales (9) empêchent son basculement excessif vers l'extérieur.

3. Dispositif selon la revendication 2, caractérisé en ce que le mécanisme répartisseur (6) est constitué par au moins une paire de cylindres distributeurs (7).

4. Dispositif selon une des revendications 1 à 3, caractérisé en ce que le dispositif répartisseur (2) peut être basculé de manière à se placer devant le côté extérieur du volet (4) de la trappe de déchargement du récipient (3).

5. Dispositif selon la revendication 4, caractérisé en ce que le basculement du dispositif répartisseur (2) peut être actionné par au moins un cylindre hydraulique (8).

6. Dispositif selon une des revendications 1 à 5, caractérisé en ce que l'attache (1) comprend un dispositif d'entraînement (11) pouvant être commandé à distance et accouplé au verrouillage (10) du volet (4) de la trappe de déchargement du récipient (3).

7. Dispositif selon la revendication 6, caractérisé en ce que le dispositif d'entraînement (11) peut être actionné hydrauliquement.

8. Dispositif selon une des revendications précédentes, caractérisé en ce que le châssis forme un cadre porteur (12) pour saisir le récipient (3) à sa face supérieure, le cadre porteur (12) pouvant être accouplé par au moins deux organes porteurs (13a, b) espacés avec un dispositif de levage capable d'amener les organes porteurs (13a, b) à des hauteurs différentes, indépendamment l'un de l'autre.

9. Dispositif selon la revendication 8, caractérisé en ce que le cadre porteur (12) comprend un dispositif d'entraînement (16) agencé pour être commandé à distance et pouvant être connecté avec le mécanisme de verrouillage (14) d'une trappe de remplissage (15) située sur la face supérieure du récipient (3), pour actionner ce mécanisme.

10. Dispositif selon la revendication 9, caractérisé en ce que le dispositif d'entraînement (16) est actionné hydrauliquement.

11. Dispositif selon une des revendications 1 à 7, caractérisé en ce que le châssis récepteur forme un cadre basculant (18) pour un véhicule (17) de transport de conteneurs sur lequel les récipients (3) peuvent être disposés.

12. Dispositif selon une des revendications 5 à 11, caractérisé en ce que l'axe de basculement du dispositif répartisseur (2) repose par un palier dans un guide formé par une ouverture allongée (20) et que le dispositif répartisseur (2) est connecté à des boulons de blocage rigides pouvant venir s'engager en position de travail dans des cales d'immobilisation (21) du conteneur (3) ouvertes vers le haut.
